# EUROPÄISCHE PATENTSCHRIFT

(11) **EP 3 184 073 B1**
(45) Veröffentlichungstag und Bekanntmachung des Hinweises auf die Patenterteilung: **29.05.2019**
(21) Anmeldenummer: 15201863.6
(22) Anmeldetag: 22.12.2015
(51) Int. Cl.: A61C 3/06, B24D 15/00

(54) **WERKZEUG ZUR BEHANDLUNG VON INTERDENTALFLÄCHEN**
TOOL FOR THE TREATMENT OF INTERDENTAL SURFACES
OUTIL DE TRAITEMENT DE SURFACES INTERDENTAIRES

(43) Veröffentlichungstag der Anmeldung: 28.06.2017
(73) Patentinhaber: Intensiv SA, 6926 Montagnola (CH)
(72) Erfinder: GOLDBECHER, Heiko, 06114 Halle (DE)
(74) Vertreter: AMMANN PATENTANWÄLTE AG BERN

(56) Entgegenhaltungen:
- DE-A1-102011 014 992
- US-A1- 2005 244 786
- US-A1- 2011 081 830
- US-A1- 2014 220 507

## Beschreibung

Die Erfindung betrifft ein Werkzeug zur Behandlung von Interdentalflächen, das einen Streifen umfasst, der auf mindestens einer Längsseite ein abrasiv wirkendes Feld aufweist.

Derartige Werkzeuge wirken abrasiv und werden insbesondere in der Kieferorthopädie eingesetzt, um beispielsweise approximal den Zahnschmelz abzutragen. Dies dient der Verkleinerung der Zähne und bei mehreren Zähnen der Platzschaffung für die Bewegung der Zähne während der kieferorthopädischen Behandlung.

Die bis anhin verwendeten Werkzeuge weisen einen Streifen auf, der vollständig vertikal und horizontal mit Abrasivpartikeln belegt ist. Dies macht es zum einen in der klinischen Behandlung schwierig, den Streifen zwischen die Zähne einzuführen, insbesondere bei Engständen. Zum anderen kann schon bei einem leichten Verkanten des Streifens an dessen apikalen Ende unerwünschte Stufen in der Zahnoberfläche entstehen.

Die Patentanmeldung DE 10 2011 014 992 A1 beschreibt einen Dentalstreifen, der auf der Oberfläche eine Vielzahl von Schleifkörnern sowie eine Vielzahl von Ausbuchtungen aufweist zur Ausbildung von Spankammern. Der Dentalstreifen ist für eine rein manuelle Handhabung ausgelegt.

Die Patentanmeldung US 2005/0244786 A1 beschreibt einen Dentalstreifen, der eine nicht-abrasiven Bereich aufweist und der gekrümmt ausgebildet ist. Auch dieser Dentalstreifen ist nur für eine rein manuelle Handhabung ausgelegt.

US2011/0081830 offenbart ein Werkzeug zur Behandlung von Dentalflächen.

Eine Aufgabe der vorliegenden Erfindung ist es, das Werkzeug so zu verbessen, dass die Handhabung vereinfacht wird und bei der Behandlung einer Interdentalfläche eine Stufenbildung am apikalen Ende des Streifens vermieden wird.

Diese Aufgabe wird durch das Werkzeug gemäss Anspruch 1 gelöst. Die abhängigen Ansprüche definieren bevorzugte Ausführungsformen des Werkzeugs sowie ein Set mit derartigen Werkzeugen.

Das Einführen des Streifens in den Zahnzwischenraum wird erleichtert und eine Stufenbildung verhindert, indem beim erfindungsgemässen Werkzeug zwischen der apikalen Kante des Streifens und dem abrasiv wirkenden Feld ein Abstand vorgesehen und die Längsseite zwischen der apikalen Kante und dem Feld blank ist.

Weitere spezifische Konstruktionsmerkmale und deren Vorteile sind aus folgender Beschreibung und Zeichnungen von Ausführungsbeispielen ersichtlich, in welchen
Fig. 1 ein erstes Ausführungsbeispiel eines erfindungsgemässen Werkzeugs in einer Seitenansicht,
Fig. 2 eine erste Variante eines Streifens für ein Werkzeug gemäss Fig. 1 im Querschnitt,
Fig. 3 eine zweite Variante eines Streifens für ein Werkzeug gemäss Fig. 1 im Querschnitt,
Fig. 4 ein zweites Ausführungsbeispiel eines erfindungsgemässen Werkzeugs in einer Seitenansicht,
Fig. 5 die Einwirkung eines vorbekannten Werkzeugs auf einen Zahn, und
Fig. 6 die Einwirkung eines erfindungsgemässen Werkzeugs auf einen Zahn darstellen.

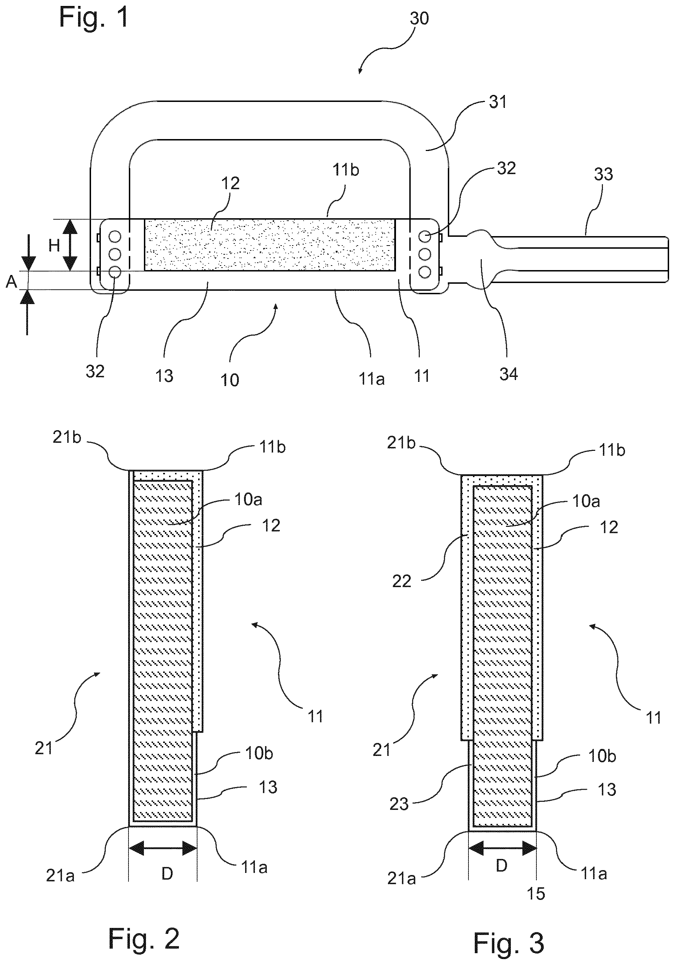

Fig. 1 zeigt ein erstes Ausführungsbeispiel eines Werkzeugs zur Behandlung von Interdentalflächen, welches einen Streifen 10 und ein Halteteil 30 umfasst.

Der Streifen 10 weist zwei Längsseiten auf, die nachfolgend als Vorderseite 11 und Rückseite 21 bezeichnet werden. Die Vorderseite 11 ist zwischen einer apikalen Kante 11a und einer koronalen Kante 11b angeordnet. Die apikale Kante 11a befindet sich beim Einführen des Streifens 10 zwischen die Zähne näher zur Zahnbasis als die koronale Kante 11b. Entsprechend ist die Rückseite 21 zwischen einer apikalen Kante 21a und einer koronalen Kante 21b angeordnet, vgl. den Querschnitt in Fig. 2 und 3. In diesen beiden Figuren sind die Grössenverhältnisse bezüglich der Dicke der einzelnen Schichten 10a, 10b, 12, 22 nicht massstabstreu dargestellt.

Die jeweilige apikale Kante 11a, 21a verläuft gerade. Im vorliegenden Beispiel hat der Streifen 10 in der Seitenansicht gemäss Fig. 1 gesehen eine im Wesentlichen rechteckige Form.

Im Beispiel gemäss Figuren 1 und 2 weist die Vorderseite 11 ein streifenförmiges Feld 12 auf, welches mit Abrasivmaterial, z.B. Diamantkörner, versehen und welches beabstandet zur apikalen Kante 11a angeordnet ist. Das Abrasivmaterial enthält Körner mit einer Grösse, welche typischerweise im Bereich von 1 - 200 Mikrometer liegt. Beispielsweise ist die Korngrösse mindestens 5 Mikrometer, bevorzugt mindestens 8 Mikrometer und/oder höchstens 100 Mikrometer, bevorzugt 90 Mikrometer.

Zwischen dem Feld 12 und der apikalen Kante 11a ergibt sich ein Feld 13, welches blank, d.h. frei von Abrasivmaterial ist. Der Abstand zwischen dem Feld 12 und der apikalen Kante 11a ist in Fig. 1 mit A bezeichnet. Dieser Abstand A ist an den Anwendungszweck angepasst. Er beträgt mindestens 0.2 mm, bevorzugt mindestens 0.5 mm und/oder höchstens 2 mm, höchstens 1.5 mm.

H bezeichnet die Höhe des Feldes 12. Sie ist typischerweise mindestens 2 mm, bevorzugt mindestens 2.5 mm und/oder höchstens 5 mm, bevorzugt höchstens 4 mm.

D bezeichnet die Dicke des Streifens 10 beim blanken Feld 13. Sie ist typischerweise mindestens 0.03 mm, bevorzugt mindestens 0.05 mm und/oder höchstens 0.2 mm, bevorzugt höchstens 0.3 mm.

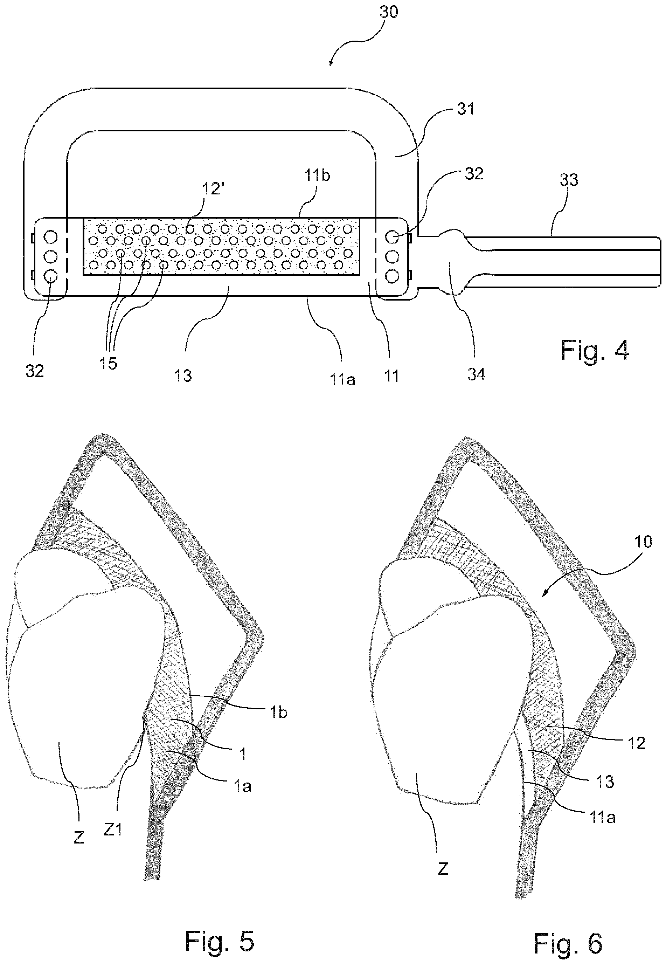

Es kann ein Set von Werkzeugen 10, 30 vorgesehen sein, welche unterschiedliche Werte für mindestens einen der folgenden Parameter aufweisen: A, D, H, Korngrösse des Abrasivmaterials, geometrische Ausgestaltung des Streifens 10. Besagte Ausgestaltung kann z.B. variieren, indem der Streifen durchgehend oder perforiert ausgestaltet ist (vgl. Fig. 1 und 4) und/oder indem die apikale Kante 11a gerade, gezackt oder auch in anderer Weise verläuft.

Beim Beispiel gemäss Fig. 2 ist nur die Vorderseite 11 mit einem abrasiven Feld 12 versehen. Fig. 3 zeigt eine Variante des Streifens, bei welcher auch die Rückseite 21 ein Feld 22 aufweist, das mit dem Abrasivmaterial versehen und das beabstandet zur apikalen Kante 21a angeordnet ist, so dass sich dazwischen ein blankes Feld 23 ergibt. Im Beispiel gemäss Fig. 3 ist der Abstand des Feldes 22 von der apikalen Kante 21a gleich wie der Abstand A beim Feld 12. Dieser Abstand kann auch unterschiedlich sein.

Als weitere Variante ist auch eine spiegelsymmetrische Anordnung der Variante gemäss Fig. 2 möglich, so dass nur die Rückseite 21 mit einem zur apikalen Kante 21a beabstandeten abrasiven Feld 22 versehen ist und die Vorderseite 11 blank ist.

Beim vorliegenden Beispiel ist der Streifen 10 mehrschichtig aufgebaut. Erweist eine erste Schicht 10a als Träger auf, welche z.B. aus Metall oder Kunststoff gefertigt ist und auf welche das Abrasivmaterial, z.B. Diamantpartikel, aufgetragen ist zur Bildung des mindestens einen abrasiven Feldes 12, 22. Der Bereich oben zwischen den koronalen Kanten 11b und 21b kann mit Abrasivmaterial bedeckt oder auch frei von diesem sein. Zumindest unten beim blanken Feld 13, 23 ist eine zweite Schicht 10b vorgesehen, welche eine besonders glatte Oberfläche aufweist. Die Schicht 10b kann auch in anderen Bereichen des Streifens aufgebracht sein, z.B. bei der Variante gemäss Fig. 2 auf der ganzen Rückseite 21 und/oder insbesondere im Falle, dass die Schicht 10b dünner als die Korngrösse des Abrasivmaterials ist, auf dem Feld 12, 22. Durch geeignete Wahl der Schicht 10b weist der Streifen unten beim blanken Feld 13, 23 eine Oberfläche auf, welche beim Einführen in den Zahnzwischenraum zu einer reduzierten Reibung zwischen Zahn und Streifen 10 führt. Demnach weist die Schicht 10b einen kleineren Reibungskoeffizienten auf als die Schicht 10a. Beispielsweise ist die Schicht 10b aus Titannitrid oder einer Kohlenstoffschicht, insbesondere einer amorphen Kohlenstoffschicht (auf Englisch "diamond-like carbon", DLC) gefertigt. Die Dicke der Schicht 10b ist typischerweise im Bereich von 0.5 - 2 Mikrometer.

Alternativ zur Anordnung der Schichten gemäss Fig. 2 und 3 ist es auch möglich, zuerst die zweite Schicht 10b auf die erste Schicht 10a aufzubringen und erst danach das Abrasivmaterial 12, 22 aufzutragen. Die zweite Schicht 10b umgibt dann in der Regel vollständig die erste Schicht 10a, so dass diese eine innere Schicht bildet.

Als weitere Variante ist es möglich, die zweite Schicht 10b wegzulassen und die Oberfläche der ersten Schicht 10a so zu behandeln, dass sie glatter wird. Beispielsweise kann diese Oberfläche poliert, insbesondere elektropoliert werden.

Bei der Fertigung des Streifens 10 wird nach Bereitstellen der Schicht 10a und gegebenenfalls der Schicht 10b der Bereich des Streifens, welcher sich vom Feld 13 über die Kanten 11a, 21a bis zum Feld 23 erstreckt, mit einer Abdeckschicht abgedeckt. Soll eine der Längsseiten 11 oder 21 ohne abrasives Feld 12, 22 hergestellt werden, so wird die gesamte Längsseite abgedeckt. Anschliessend erfolgt eine galvanische Belegung, bei welcher die Abrasivpartikel, z.B. Diamantpartikel, im nicht abgedeckten Bereich des Streifens aufgetragen werden und so das Feld 12 und/oder 22 gebildet wird. Anschliessend wird die Abdeckschicht entfernt. Wie oben erwähnt, kann die Schicht 10b vor oder nach dem Auftragen des Abrasivmaterials aufgebracht oder auch weggelassen werden.

Das in Fig. 1 gezeigte Halteteil 30 weist einen Bügel 31 auf, an welchem der Streifen 10 endseitig befestigt ist, z.B. durch Löten an den Stellen 32 oder durch andere Verbindungstechniken. Seitlich des Bügels 31 ist auf dem Niveau des Streifens10 ein Griffelement 33 angebracht, welches hier als Einsatz in ein Gerät ausgelegt ist, um das Werkzeug 10, 30 in Erstreckungsrichtung des Streifens 10 mit einem bestimmten Hub hin- und her zu bewegen. Das Gerät kann z.B. ein Winkelstück sein, welches ausgelegt ist für eine wahlweise rotierende oder lineare Bewegung.

Sind mehrere Werkzeuge 10, 30 vorgesehen, welche unterschiedliche Ausgestaltungen des Streifens 10 aufweisen, so kann zur einfacheren Unterscheidung das jeweilige Werkzeug 10, 30 mit einem eindeutigen Kennzeichen versehen sein. Beispielsweise ist eine Zone vorgesehen, z.B. am Bügel 31 oder Zone 34 beim Griffelement 33, welche mit einer eindeutigen Farbe versehen ist, die z.B. einer bestimmten Korngrösse des Abrasivmaterials und/oder einem bestimmten Wert für D zugeordnet ist.

In Fig. 1 bis 3 ist das abrasive Feld 12, 22 durchgehend mit Abrasivmaterial versehen. Es ist auch möglich, innerhalb eines abrasiven Feldes 12, 22 und/oder an einer anderen Stelle des Streifens 10 Lücken vorzusehen. Fig. 4 zeigt eine Variante, bei welcher das Feld 12' perforiert ist. Zu diesem Zweck ist dieses mit Löchern 15 versehen, die z.B. auf einem Raster angeordnet sind. Die übrige Ausgestaltung des Werkzeugs ist gleich wie beim Beispiel gemäss Fig. 1. So ist auch bei der Variante gemäss Fig. 4 zwischen dem Feld 12' und der apikalen Kante 11a ein blankes Feld 13 angeordnet. Alternativ oder ergänzend können auch andere Stellen des Streifens perforiert sind, z.B. das Feld 13.

Das Werkzeug 10, 30 gemäss den Figuren 1 bis 4 ist ausgelegt für eine Verwendung mit einem Gerät, welches die gewünschte Werkzeugbewegung bewirkt, z.B. eine Hubbewegung von der Nulllage aus um + 0.9 mm bzw. - 0.9 mm und 20'000 Bewegungen pro Minute.

Das hier beschriebene Werkzeug ist zur Behandlung von Interdentalflächen einsetzbar, insbesondere zur approximalen Schmelzreduktion in der Kieferorthopädie. Bei der Hin-und Herbewegung des Werkzeugs wird der Zahnschmelz abgeschliffen. Dies dient der Verkleinerung der Zähne, typischerweise um weniger als 0,5 mm pro Zahn, und bei mehreren Zähnen der Platzschaffung für die Bewegung der Zähne während der kieferorthopädischen Behandlung. Nebst einer Reduktion des Zahnschmelzes ist das Werkzeug auch für die Finierung und Politur einsetzbar.

Das Werkzeug hat u.a. den Vorteil, dass das Einführen in den Zahnzwischenraum erleichtert ist und eine unerwünschte Stufenbildung verhindert wird. Dies ist aus dem Vergleich der beiden Figuren 5 und 6 ersichtlich, in welchen Z einen Zahn bezeichnet. Der Nachbarzahn ist in den Figuren nicht dargestellt. Bei der Situation gemäss Fig. 5 wird ein vorbekanntes Werkzeug mit einem Streifen 1 verwendet, der an der Vorderseite von der koronalen Kante 1b bis und mit zur apikalen Kante 1a mit Abrasivmaterial versehen ist. Beim Einführen des Werkzeugs kommt die apikale Kante 1a zuerst in Kontakt mit den Zähnen. Ist der Zwischenraum gering, so ist bereits das Einführen aufgrund der Abrasvimaterials an der Kante 1a schwierig. Ist der Streifen 1 in den Zwischenraum eingeführt, so kann bereits ein leichtes Verkanten dazu führen, dass die abrasive Einwirkung der Streifens 1 im Bereich der apikalen Kante 1a zu einer unerwünschten Stufe Z1 im Zahn führt. Fig. 6 zeigt die Situation bei Anwendung des hier beschriebenen Werkzeugs 10, 30. Der Streifen 10 weist im Bereich der apikalen Kante 11a ein blankes Feld 13 auf. Dieses ist gleitfähiger als das abrasive Feld 12, so dass auch bei Engständen ein möglichst leichtes Einführen gewährleistet ist. Das Feld 13 ist frei von Abrasivmaterial, so dass auch bei einem Verkanten des Streifens eine Stufenbildung im Zahn Z verhindert wird.

## Patentansprüche

1. Werkzeug zur Behandlung von Interdentalflächen, mit einem Streifen (10), der auf mindestens einer Längsseite (11, 21) ein abrasiv wirkendes Feld (12, 12', 22) aufweist, welches mit Abrasivpartikeln versehen ist, und mit einem Griffelement (33) zur Kopplung an ein Gerät, mittels welchem das Werkzeug in eine lineare Bewegung versetzbar ist, wobei das Feld (12, 12', 22) mit einem Abstand (A) zur apikalen Kante (11a, 21a) der Längsseite (11, 21) angeordnet ist, der im Bereich von 0.2 - 1.5 mm liegt, und wobei zum erleichterten Einführen des Streifens in einen Zahnzwischenraum und zur Vermeidung einer Stufenbildung bei der Behandlung einer Interdentalfläche die Längsseite zwischen der apikalen Kante, die gerade verläuft, und dem Feld blank ist.

2. Werkzeug nach Anspruch 1, wobei der Abstand (A) mindestens 0.5 mm beträgt.

3. Werkzeug nach einem der vorangehenden Ansprüche, wobei das Feld (12, 12', 22) im Wesentlichen rechteckig ist.

4. Werkzeug nach einem der vorangehenden Ansprüche, wobei der blanke Bereich (13, 23) der Längsseite (11, 21) zwischen der apikalen Kante (11a, 21a) und dem Feld (12, 12', 22) aus einer Schicht aus Titannitrid oder aus einer Kohlenstoffschicht, insbesondere amorphen Kohlenstoffschicht gebildet ist.

5. Werkzeug nach einem der vorangehenden Ansprüche, wobei der blanke Bereich (13, 23) der Längsseite (11,21) zwischen der apikalen Kante (11a, 21a) und dem Feld (12, 12', 22) poliert ist.

6. Werkzeug nach einem der vorangehenden Ansprüche, wobei der Streifen (10) einen Träger (10a) aufweist, auf welchem zumindest teilweise eine Schicht (10b) aufgetragen ist, wobei auf der Schicht und/oder auf dem Träger Abrasivpartikel, insbesondere Diamantpartikel, aufgebracht sind zur Bildung des abrasiv wirkenden Feldes (12, 12', 22).

7. Werkzeug nach einem der vorangehenden Ansprüche, wobei beide Längsseiten (11, 21) des Streifens (10) anschliessend zur apikalen Kante (11a, 21a) einen blanken Bereich (13, 23) aufweisen.

8. Werkzeug nach einem der vorangehenden Ansprüche, wobei beide Längsseiten (11, 21) des Streifens (10) ein abrasiv wirkendes Feld (12, 12', 22) aufweisen, welches jeweils mit einem Abstand (A) zur apikalen Kante (11a, 21a) der Längsseite (11, 21) angeordnet sind.

9. Werkzeug nach einem der vorangehenden Ansprüche, welches einen Bügel (31) aufweist, an welchem der Streifen (10) gehalten ist.

10. Werkzeug nach einem der vorangehenden Ansprüche, wobei das Feld (12') perforiert ist.

11. Werkzeug nach einem der vorangehenden Ansprüche, wobei der Bereich zwischen den koronalen Kanten (11b, 21b) der beiden Längsseiten (11, 21) frei von Abrasivmaterial ist.

12. Set mit mindestens zwei Werkzeugen nach einem der vorangehenden Ansprüche, wobei sich die Werkzeuge durch mindestens einen der folgenden Parameter unterscheiden:
- den Abstand (A) zwischen der apikalen Kante (11a, 21a) und dem abrasiv wirkenden Feld (12, 12', 22),
- die Korngrösse der Abrasivpartikel, welche das abrasiv wirkende Feld bilden.

## Claims

1. A tool for treatment of interdental surfaces, comprising a strip (10) provided on at least one longitudinal side (11,21) with an abrasively active field (12, 12', 22), which is provided with abrasive particles, and a handle member (33) for coupling to an appliance, by means of which the tool can be set in a linear movement, wherein the field (12, 12', 22) is arranged at a distance (A) from the apical edge (11a, 21a) of the longitudinal side (11, 21), which distance is in the range of 0.2 - 1.5 mm, and wherein the longitudinal side is blank between the apical edge, which is straight, and the field in order to facilitate the introduction of the strip into an interdental space and to avoid the formation of steps during the treatment of an interdental surface.

2. Tool according to claim 1, wherein the distance (A) is at least 0.5 mm.

3. Tool according to one of the preceding claims, wherein the field (12, 12', 22) is substantially rectangular.

4. Tool according to one of the preceding claims, wherein the blank portion (13, 23) of the longitudinal (11, 21) side between the apical edge (11a, 21a) and the field (12, 12', 22) is formed of a layer of titanium nitride or of a carbon layer, in particular an amorphous carbon layer.

5. Tool according to one of the preceding claims, wherein the blank portion (13, 23) of the longitudinal side (11, 21) between the apical edge (11a, 21a) and the field (12, 12', 22) is polished.

6. Tool according to one of the preceding claims, wherein the strip (10) comprises a support (10a) to at least part of which a layer (10b) is applied, wherein abrasive particles, in particular diamond particles, are applied to the layer and/or the support in order to form the abrasively active field (12, 12', 22).

7. Tool according to one of the preceding claims, wherein both longitudinal sides (11, 21) of the strip (10) comprise a blank portion (13, 23) adjacent to the apical edge (11a, 21a).

8. Tool according to one of the preceding claims, wherein both longitudinal sides (11, 21) of the strip (10) comprise an abrasively active field (12, 12', 22) which is arranged at a distance (A) from the apical edge (11a, 21a) of the longitudinal side (11, 21).

9. Tool according to one of the preceding claims, which comprises a bow (31), on which the strip (10) is retained.

10. Tool according to one of the preceding claims, wherein the field (12') is perforated.

11. Tool according to one of the preceding claims, wherein the area between the coronal edges (11b, 21b) of the two longitudinal sides (11, 21) is free of abrasive material.

12. Set comprising at least two tools according to one of the preceding claims, wherein the tools differ with regard to at least one of the following parameters:
- the distance (A) between the apical edge (11a, 21a) and the abrasively active field (12, 12', 22),
- the grain size of abrasive particles forming the abrasively active field.

## Revendications

1. Outil de traitement de surfaces interdentaires, comprenant une bande (10) dont l'un au moins des côtés longitudinaux (11, 21) présente une zone à action abrasive (12, 12', 22) munie de particules abrasives, ainsi qu'un élément manche (33) pour accouplement à un appareil permettant de transmettre à l'outil un mouvement linéaire, où ladite zone (12, 12', 22) est disposée à une distance (A) du bord apical (11 a, 21a) dudit côté longitudinal (11, 21) qui est comprise dans la plage de 0.2 - 1.5 mm et où, afin de faciliter l'insertion de la bande dans un interstice dentaire et d'éviter la formation d'épaulements pendant le traitement d'une surface interdentaire, le côté longitudinal est lisse entre le bord apical, qui s'étend en ligne droite, et ladite zone.

2. Outil selon la revendication 1, où la distance (A) est égale à au moins 0.5 mm.

3. Outil selon l'une des revendications précédentes, où la zone (12, 12', 22) est substantiellement rectangulaire.

4. Outil selon l'une des revendications précédentes, où l'espace lisse (13, 23) du côté longitudinal (11, 21) entre le bord apical (11a, 21a) et ladite zone (12, 12', 22) est formé d'une couche de nitrure de titane ou d'une couche de carbone, en particulier d'une couche de carbone amorphe.

5. Outil selon l'une des revendications précédentes, où l'espace lisse (13, 23) du côté longitudinal (11, 21) entre le bord apical (11a, 21a) et ladite zone (12, 12', 22) est poli.

6. Outil selon l'une des revendications précédentes, où la bande (10) comporte un support (10a) sur lequel est appliqué au moins partiellement une couche (10b), des particules abrasives, en particulier des particules de diamant, étant appliqués sur la couche et/ou sur le support pour former la zone à action abrasive (12, 12', 22).

7. Outil selon l'une des revendications précédentes, où les deux côtés longitudinaux (11, 21) de la bande (10) présentent un espace lisse (13, 23) adjacent au bord apical (11a, 21a).

8. Outil selon l'une des revendications précédentes, où les deux côtés longitudinaux (11, 21) de la bande (10) comportent une zone à action abrasive (12, 12', 22) laquelle est chaque fois agencée à une distance (A) du bord apical (11a, 21a) du côté longitudinal (11, 21).

9. Outil selon l'une des revendications précédentes, lequel présente un étrier (31) par lequel la bande (10) est retenue.

10. Outil selon l'une des revendications précédentes, où ladite zone (12') est perforée.

11. Outil selon l'une des revendications précédentes, où la surface entre les bords coronaux (11b, 21b) des deux côtés longitudinaux (11, 21) est exempte de matière abrasive.

12. Ensemble comprenant au moins deux outils selon l'une des revendications précédentes, où les outils se distinguent par l'un au moins des paramètres suivants:
- la distance (A) entre le bord apical (11a, 21a) et la zone à action abrasive (12, 12', 22),
- la taille des particules abrasives formant la zone à action abrasive.
